# EUROPEAN PATENT APPLICATION

(11) **EP 1 650 234 A1**
(43) Date of publication of application: **26.04.2006**
(21) Application number: 04292505.7
(22) Date of filing: 21.10.2004
(51) Int. Cl.: C08F 10/02, C08F 4/70

(54) **Nickel complexes in heterogeneous catalysis**

(71) Applicant: TOTAL PETROCHEMICALS RESEARCH FELUY, 7181 Seneffe (Feluy) (BE); CENTRE NATIONAL DE LA RECHERCHE SCIENTIFIQUE (CNRS), 75016 Paris (FR)
(72) Inventor: Saillard, Benjamin, 69100 Villeurbanne (FR); Spitz, Roger, 69006 Lyon (FR); Boisson, Christophe, 01390 Tramoyes (FR); Razavi, Abbas, 7000 Mons (BE)
(74) Representative: Roufosse, Micheline C.

(57) **Abstract**

The present invention discloses a supported catalyst system that comprises a supported Keim-type nickel complex.

It further discloses a method for preparing said supported catalyst system and its use for homo- or co-polymerising polar and non polar monomers.

## Description

This invention relates to the field of polymerisation catalysts based on supported Keim-type nickel complexes.

Polymers of ethylene and other olefins are of major commercial appeal. These polymers have a very large number of uses, ranging from low molecular weight products for lubricants and greases, to higher molecular weight products for manufacturing fibres, films, moulded articles, elastomers, etc. In most cases, the polymers are obtained by catalytic polymerisation of olefins using a compound based on a transition metal. The nature of this compound has a very strong influence on the properties of the polymer, its cost and its purity. Given the importance of polyolefins, there is a permanent need to improve the catalytic systems in order to propose new systems.

There is a variety of homogeneous or heterogeneous catalysts for the polymerisation or copolymerisation of ethylene. Among the families that are most widely known, examples that may be mentioned include the "Ziegler-type" catalysts involving organometallic complexes of metals from groups 3 and 4 or "Philipps-type" catalysts involving chromium complexes. There are also nickel-based catalysts, which have been used for many years for polymerising α-olefins. Certain systems also have a certain level of tolerance toward polar media.

Among the many catalytic systems presented in literature, some inventions disclose the in situ formation of active species in the polymerisation medium. Examples that have been described include the combination between a nickel complex with benzoic acid derivatives such as disclosed for example in US-A-3,637,636 or with tertiary organophosphorous ligands such as disclosed in US-A-3,635,937 or in US-A-3,647,914 or alternatively with glycolic, thioglycolic or thiolactic acid such as disclosed in US-A-3,661,803. US-A-3,686,159 describes the use of a complex of nickel in oxidation state zero with a phosphorus ylide ligand.

Other methods such as disclosed for example in US-A-4,716,205 or GB-60,319 describe active polymerisation systems comprising an isolated catalytic system and an acceptor compound capable of extracting one of the ligands from the nickel complex.

Surprisingly, the applicants have observed that the Keim-type nickel complex of formula (I) 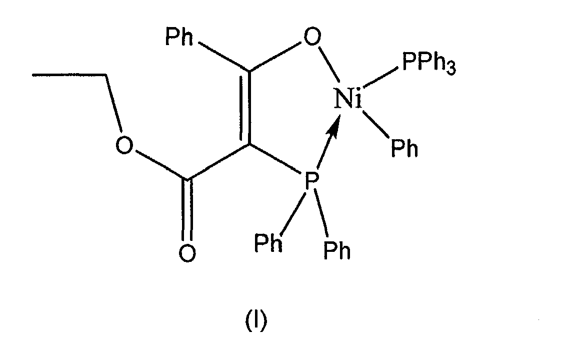 has an atypical behaviour in homogeneous catalysis.

When used alone, it produces polymers having a fairly high molecular weight with a good activity. When used with a scavenger, the molecular weight of the polymer is unchanged and the activity decreases.

There is thus a need for catalyst systems based on nickel complex that can produce polymers having a high molecular weight while retaining a good activity.

It is an aim of the present invention to prepare an active catalyst system that does not require an activating agent.

It is another aim of the present invention to prepare a catalyst system that does not deactivate quickly.

It is a further aim of the present invention to prepare a catalyst system for producing polymers having a high molecular weight.

It is also an aim of the present invention to provide a method for the homo- or copolymerisation of non-polar and polar molecules.

It is yet another aim of the present invention to prepare polymers having a good morphology.

Accordingly, the present invention discloses an active supported catalyst system that comprises:
a) a Keim-type complex of formula (II) 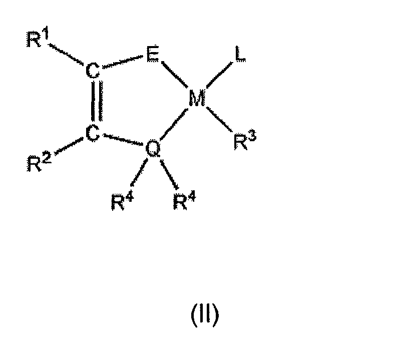 wherein
   - E is an oxygen or sulfur atom, preferably, an oxygen atom;
   - Q is a phosphorus, arsenic or antimony atom, preferably a phosphorous atom;
   - R¹ and R² are independently selected from H, a hydrocarbyl having from1 to 20 carbon atoms, or a functional group selected from -OR', -CO₂R', - CO₂M, -C(O)NR"₂, -C(O)R', -SR', -SO₂ OSO₂R', -P(O)(OR')_{2-y}(R")y, -Cl, -S(O)R', -CN, -NHR', -N(R')2, 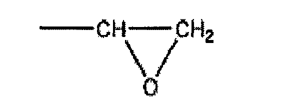 -Si(OR')₃₋ₓ,(R")ₓ, -OSi(OR')₃₋ₓ(R")ₓ, -NO₂, -SO₃Ma, -PO₃Ma₂, - P(O)(OR')₂Ma, wherein Ma is alkali or alkaline earth metal, ammonium, quaternary ammonium, phosphonium or arsonium, y is 0, 1 or 2, x is 0 or an integer from 1 to 3, each R' is independently a hydrocarbyl having from 1 to 20 carbon atoms and each R" is independently hydrogen or a hydrocarbyl having from 1 to 20 carbon atoms, or R¹ and R², taken together, is a substituted or unsubstituted C5-8 alicyclic, C5-8 heterocyclic or a C6-14 aromatic ring, the heteroatom of the heterocyclic ring being selected from O, N, S; preferably, R¹ is a phenyl; preferably R² is -C(O)R', more preferably, it is -CO₂R'.
   - R³ and each R⁴ are each independently selected from hydrogen or a hydrocarbyl having from 1 to 20 carbon atoms; preferably they are bulky and independently selected from aryl or branched alkyl groups, more preferably they are substituted or unsubstituted phenyls;
   - M is nickel or palladium, preferably M is nickel;
   - L is a ligand;
b) a functionalised support.

Ligand L can be a weakly coordinating ligand. A weakly coordinating ligand is a compound that can bond to nickel but that is readily displaced therefrom by the olefin in the process of polymerisation. It can be selected from pyridine, piperidine, alkyl ethers, tetrahydrofuran, alkyl and aryl nitriles and dinitriles, alcohols, amides, aliphatic esters and tertiary amines.

Alternatively, L is a strongly coordinating ligand. A strongly coordinating ligand can bond to nickel sufficiently strongly to displace therefrom part or all of the olefin being polymerised. It can be selected from compounds of formula ER"
wherein E and R" are as defined hereabove. In this case, it is necessary to include an acceptor compound that reacts irreversably with ligand L. The preferred weakly coordinating ligand is pyridine, the preferred strongly coordinating ligand is PPh₃.

Alternatively, the Keim-type complex may have formula III 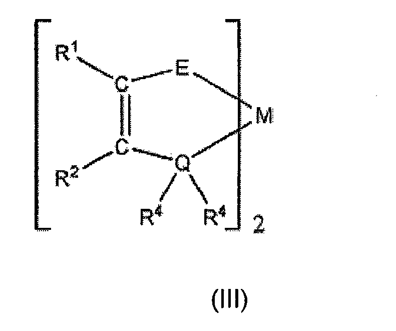 wherein M, E, Q, R¹, R², R³ and R⁴ are as defined here-above,
in combination with a suitable alkylating or arylating agent.

In yet another embodiment, L and R³ taken together can form a ring.

A suitable alkylating or arylating agent is able to chemically transfer alkyl or aryl groups to metal M. It can be selected from alkyl or aryl iodide, aluminium alkyl or aryl, transition metal alkyl- or aryl- containing compounds.

Most preferably, R² is a group -C(O)OR^{$}, wherein R^{$} represents a hydrocarbon-based radical that may contain from 1 to 6 carbon atoms. Preferably R^{$} is an ethyl, tert-butyl or benzyl group.

In the preferred embodiment of the present invention, the neutral nickel complex has a reactive ester group.

The phosphine groups are preferred to improve the activity of the complex. When the PPh₃ group is removed, there is creation of an active arm and a coordination void.

The activation of the nickel complex is carried out after synthesis of the complex by the supporting reaction. In the present invention, the supporting reaction is a complexation reaction. The group that is removed does not create an electrical charge and there is thus no ionisation. The electronic density is modified by the supporting reaction and ionisation is therefore not necessary.

The present invention also discloses a method for preparing an active supported catalyst system based on a Keim-type nickel complex that comprises the steps of:
a) providing a support prepared from one or more porous mineral oxides;
b) optionally submitting the support to a thermal treatment;
c) optionally silanising the support with a reactive silane:
d) functionalising the support with a Lewis acid that binds itself to the support;
e) dissolving the Keim-type metal complex in a solvent, preferably an organic solvent, more preferably an aromatic solvent;
   wherein the metal complex is given by formula (II) 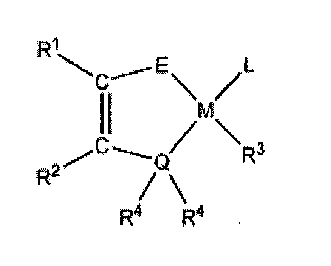 wherein E, Q R¹, R², R³, R⁴, M and L are as defined above;
f) impregnating the functionalised support of step d) with the solution of step e);
g) optionally washing the impregnated support with an organic solvent;
h) drying the finished catalyst component.

The support is prepared from one or more porous mineral oxides. The porous mineral oxide is advantageously chosen from silica, alumina and mixtures thereof, preferably, it is silica.

The porous mineral oxide particles preferably have at least one of the following characteristics:
- they include pores having a diameter ranging from 7.5 to 40 nm;
- they have a porosity ranging from 1 to 4 cm³/g;
- they have a specific surface area ranging from 100 to 1000 m²/g; and
- they have an average diameter ranging from 1 to 100 µm.

Typically, the support has -OH radicals on its surface, in particular from 0.25 to 10, and even more preferably from 0.5 to 4 -OH radicals, per nm². Supports may be of various kinds. Depending on their nature, their state of hydration and their ability to retain water, it may be necessary to carry out dehydration treatments of greater or lesser intensity depending upon the desired surface content of -OH radicals.

Those skilled in the art may determine, by routine tests, the dehydration treatment that should be applied to the support that they have chosen, depending on the desired surface content of -OH radicals.

More preferably, the starting support is made of silica. Optionally, the silica may be heated between 50 and 1000 °C, preferably between 120 and 800 °C, more preferably between 140 and 700 °C under an inert gas atmosphere, such as for example under nitrogen or argon, at atmospheric pressure or under a vacuum of about 10⁻⁵ bar, for at least 60 minutes.

Alternatively and optionally, the heat treatment can be carried out at a temperature of from 100 to 450 °C, in combination with a silanisation treatment. This results in species derived from silicon being grafted on the surface of the support thereby making said surface more hydrophobic.

If the optional silanisation is carried out, the reactive silane may, for example, be an alkoxytrialkylsilane, such as for example methoxytrimethylsilane, or a trialkylchlorosilane, such as for example triethylchlorosilane or hexamethyldisilasane (HMDS). It is typically applied to the support by forming a suspension of this support in an organic silane solution, said silane solution having a concentration of between 0.1 and 10 mol per OH radicals on the support. The solvent for this solution may be chosen from linear or branched aliphatic hydrocarbons, such as hexane or heptane, alicyclic hydrocarbons, optionally substituted, such as cyclohexane, and aromatic hydrocarbons, such as toluene, benzene or xylene. The treatment of the support by the silane solution is generally carried out under stirring at a temperature of from 50 to 150 °C, during 1 to 72 hours, by any method known in the art.

After silanisation, the solvent is removed typically by siphoning or filtration, and the support is then washed thoroughly.

The surface -OH radical content of the support may be assayed using known techniques such as, for example, by reacting an organomagnesium compound such as CH₃MgCl with the support and by measuring the amount of methane given off as described in McDaniel (McDaniel M.P., in J. Catal., 67, 71,1981) or by reacting triethylaluminium with the support and by measuring the amount of ethane given off as described by Gachard-Pasquet (Thesis of Veronique Gachard-Pasquet, Universite Claude Bernard, Lyon 1, France, pages 221-224, 1985).

It must be noted that the untreated support typically already contains surface acid sites.

The support is then functionalised with a Lewis acid. The Lewis acid is preferably an organometallic compound or a mixture thereof that is able to bind itself to the surface of the support. The silica interacts with the organometallic compound comprising a polar group to form functionalised agents of general formula Si-O-M(R)ₙ(OR)ᵥ₋ₙ wherein v is the valence of metal M and n is an integer from 0 to v or of general formula Si-O-R or combinations thereof. In both formulae, R is an alkyl having from 1 to 12 carbon atoms.

The Lewis acid is preferably an alkylated derivative of AI, B or Mg. Preferably, it is selected from an alkylated derivative of aluminium of formula (III)

AIR⁵ₙX₃₋ₙ (III)

wherein the R⁵ groups, may be the same or different, and are a substituted or unsubstituted alkyl, containing from 1 to 12 carbon atoms such as for example ethyl, isobutyl, n-hexyl and n-octyl or an alkoxy or an aryl and X is a halogen or hydrogen, n is an integer from 1 to 3, with the restriction that at least one R⁵ group is an alkyl. Preferably, the Lewis acid is an aluminium alkyl, and more preferably it is triisobutylaluminium (TIBAL) or triethylaluminium (TEAL). The alkylating agent may also contain fluor.

All the surface -OH groups are thought to have reacted with the alkylating agent by any one of the following modes: 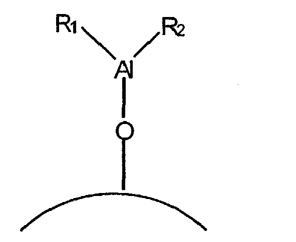 superscripts

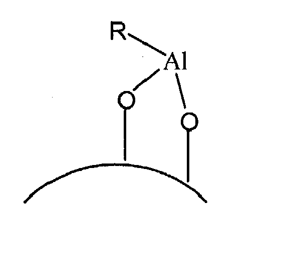

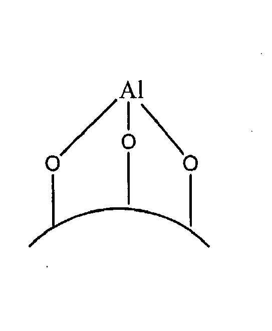

The amount of Lewis acid used in the functionalisation reaction is a function of the number OH sites per unit surface of support. Preferably, the functionalisation agent is used in an amount of from1 to 4 equivalents of agent per OH site.

The fixation of aluminium on the surface of the support is carried out and controlled by methods that are known in the art.

The metal complex is then dissolved in an organic solvent, preferably in an aromatic solvent such as for example toluene or benzene and impregnated on the surface of the support.

The amount of metal is also determined with respect to the number of OH sites present on the surface of the support. The total amount of metal M is of from 1 to 100 equivalents per OH site. The total amount of metal used in the preparation is generally not fixed on the surface: it is typically of about 2 mol% with respect to the number of OH sites.

The total amount of metal used in the preparation is preferably smaller than the amount of aluminium fixed on the support. The molar ratio M/AI is smaller than 1, more preferably it is smaller than 1/10.

The present invention further provides a method for homo- or co-polymerising non polar and/or polar monomers that comprises the steps of:
a) providing an active supported catalyst system that comprises a Keim-type nickel complex as defined here-above and a functionalised support;
b) injecting one or more non polar and/or polar monomers;
c) maintaining under polymerisation conditions;
d) retrieving a polymer.

The polymerisation conditions are not particularly limited. Polymerisation can advantageously be carried out at a temperature of from 20 to 100 °C, preferably from 30 to 80 °C, more preferably from 40 to 60 °C, and at a monomer pressure of from atmospheric to 100 bars, preferably from 5 to 50 bars. The activity increases with increasing temperature and with increasing pressure as for all nickel-based catalyst systems.

In homogeneous catalysis, there is an extremum in the activity curve as a function of temperature: increasing the temperature favours bimolecular encounters, thereby increasing catalyst deactivation occurring by bimolecular mechanism. In hereogeneous catalysis, such deactivation mechanism is not operational because metallic complexes are fixed on the support's surface and are therefore not mobile. It is however possible that very high temperatures favour detachment of catalyst component from the support's surface.

A test was carried out at a temperature of 90 °C and the polymer obtained had a large number of branches, but in addition it seemed partly synthesised by homogeneous catalysis, thereby showing that the metal complex had been detached from the support's surface. The homogeneous catalyst system was less active than an heterogeneous catalyst system because:
(i) the surface was absent and thus did not play any role;
(ii) the catalyst was deactivated by bimolecular interactions occurring at high temperature.
   Typically, activity increases linearly with increasing pressure, but poisons may exist in the monomer for which the concentration increases with increasing pressure, thereby decreasing the catalyst's lifetime. Activity thus increases with increasing pressure but the productivity is not necessarily increased.

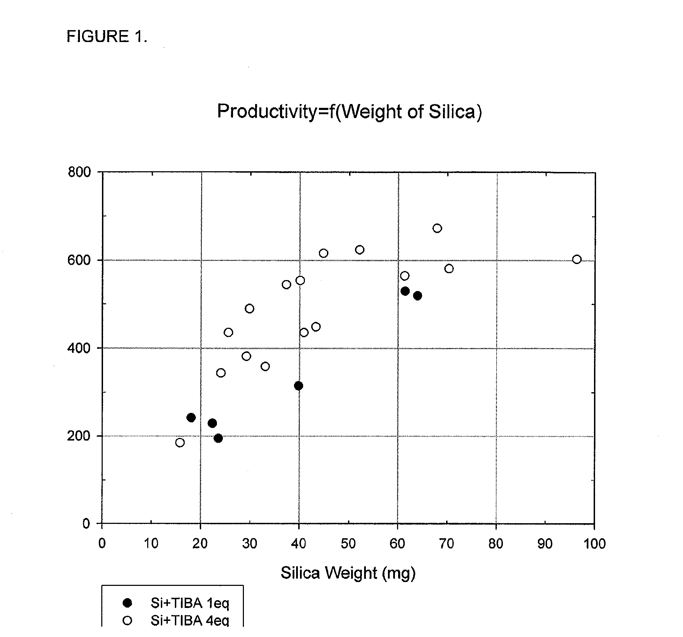

The productivity of the catalyst systems increase with increasing mass of silica and at equivalent amount of silica, it increases with increasing amount of functionalisation agent. This behaviour is displayed in Figure 1 representing the productivity of the catalyst system as a function of mass of silica for a silica impregnated respectively with one equivalent and with 4 equivalents of TIBAL.

The catalyst system of the present invention is very active particularly in the polymerisation of ethylene. It provides polymers having a broad molecular weight distribution of from 5 to 30, generally of at least 10. The polymers also have high crystallinity, high weight average molecular weight Mw of from 20000 to 500000 and good particle morphology. By good particle morphology, it is meant that the polymer has well defined grains.

The polymers obtained are very linear: they have very few branches, typically from 0.3 to 1 short branches per 1000 carbon atoms and they have no or very few long branches. A short branch has typically less than 6 carbon atoms.

The catalyst system of the present invention can also be used for copolymerising an α-olefin, preferably ethylene for example with hexene or with polar monomers.

The molecular weight distribution is defined by the polydispersity index that is the ratio Mw/Mn of the weight average molecular weight Mw over the number average molecular weight Mn. It is determined by Gel Permeation Chromatography (GPC).

### List of Figures.

Figure 1 represents the productivity of the catalyst system described in the examples, expressed in grams of polymer per gram of support after 60 minutes, as a function of mass of silica expressed in mg respectively with 1 equivalent and with 4 equivalents of TIBAL as functionalisation agent.

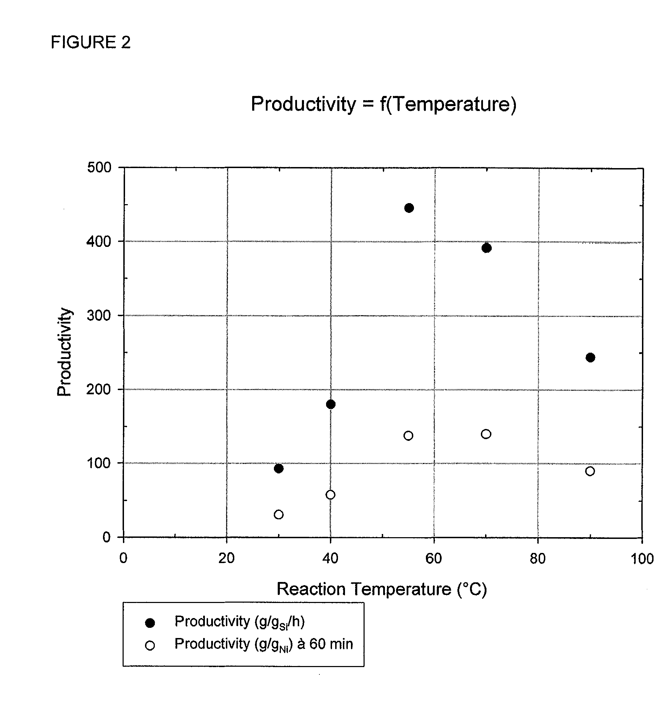

Figure 2 represents the productivity of the catalyst system described in the examples, expressed in grams of polymer per gram of silica, represented by the solid circles, or in grams of nickel, represented by the open circles, after 60 minutes, as a function of temperature expressed in degree centigrade.

### Examples.

The polymerisation of ethylene was carried out with a supported Keim-type nickel complex according to the present invention.

A silica support sold by Grace Davisson under the name Grace 332® was used as starting material. It had a specific surface area of 300 m²/g. It was treated under dynamic vacuum (10⁻² mbar) according to the following temperature program:
- heated from 30 to 100 °C in one hour;
- heated from 100 to 130 °C in 30 minutes;
- heated from 130 to 450 °C in one hour;
- maintained at a temperature of 450 °C for 4 hours.

This treatment provided silica with an amount of surface silanol of about 1.3 mmol/g.

It was then alkylated with an organoaluminium. In a 250 mL tri-necked flask equipped with a mechanical stirrer, 2.32 g of the treated silica were suspended in 100 mL of anhydrous toluene. This suspension was treated during a period of time of one hour, at room temperature (about 25 °C) with the selected alkylating agent. 100 mL of toluene were added thereafter, the solution was then stirred for 10 minutes and decanted in order to remove the supernatent. This washing step was repeated three times with heptane. After the last washing step, the impregnated support was dried under dynamical vacuum (10⁻² mbar) during 30 minutes.

The nature and the amount of alkylating agent used for each example are displayed in Table I.

The Keim-type nickel complex represented by formula 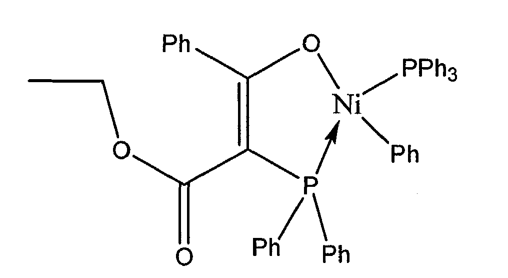 wherein substituent R' in the COOR' group was ethyl, was deposited on and reacted with the support in amounts as shown in Table I. Optionally, R' could be methyl.

The polymerisation was then carried out under a relative ethylene pressure as shown in Table I and under agitation at a rotational speed of 1200 rpm and at a temperature of 55 °C.
The solvent was toluene or heptane as indicated in Table I.
The productivity was measured after a polymerisation time of 60 minutes except for the last two lines of Table I where it was measured after a polymerisation time of 10 minutes.
The polymers' properties are displayed in Table II.
The molecular weight was measured by gel permeation chromatography at a temperature of 135 °C using trichlorobenzene (TCB) as solvent and a refractometre detector

**TABLE I.**

| Ex | C2 P (bars) | activity (g/gSi/h) | productivity (g/gSi) | organoAI | equiv. catalyst | mass Si (mg) | solvent |
|---|---|---|---|---|---|---|---|
| 1 | 4 | 43 | 37 | TEAL | 1 | 411 | toluene |
| 2 | 4 | 28 | 27 | TEAL | 1 | 646 | toluene |
| 3 | 4 | 63 | 53 | DEAC | 1 | 360 | toluene |
| 4 | 4 | 43 | 17 | DEAC | 1 | 62 | toluene |
| 5 | 4 | 66 | 63 | DEAC | 1 | 178 | toluene |
| 6 | 4 | 46 | 39 | DEAC | 1 | 143 | toluene |
| 7 | 4 | 69 | 64 | DEAC | 1 | 206 | toluene |
| 8 | 4 | 95 | 72 | TEAL | 0.5 | 87 | toluene |
| 9 | 4 | 92 | 68 | TEAL | 0.5 | 268 | toluene |
| 10 | 4 | 12 | 7 | TEAL | 0.1 | 135 | toluene |
| 11 | 4 | 18 | 9 | TEAL | 0.1 | 263 | toluene |
| 12 | 4 | 35 | 21 | TEAL | 0.1 | 140 | heptane |
| 13 | 4 | 30 | 21 | TEAL | 0.1 | 433 | heptane |
| 14 | 4 | 258 | 160 | TIBAL | 0.1 | 269 | heptane |
| 15 | 4 | 190 | 160 | DEAF | 0.1 | 254 | heptane |
| 16 | 4 | 91 | 82 | DEAF | 0.1 | 71 | heptane |
| 17 | 4 | 110 | 80 | TIBAL | 0.1 | 85 | heptane |
| 18 | 4 | 100 | 67 | TIBAL | 0.1 | 90 | heptane |
| 19 | 4 | 160 | 110 | TIBAL | 0.1 | 168 | heptane |
| 20 | 4 | 180 | 156 | TIBAL | 0.1 | 138 | heptane^{b} |
| 21 | 4 | 160 | 116 | TMSC+ TIBAL | 0.1 | 138 | heptane^{c} |
| 22 | 21 | 1800 | 150^{a} | TIBAL | 0.1 | 560 | heptane |
| 23 | 21 | 1350 | 78^{a} | TIBAL | 0.1 | 211 | heptane |

| | | | | | | | |
|---|---|---|---|---|---|---|---|
| ^{a} means that the productivity was measured after a polymerisation time of 10 minutes. TMSC = triméthylchlorosilane | | | | | | | |
| ^{b} means that 10 mL of hexene were added to the solvent. | | | | | | | |
| ^{c.} means that 40 mL of hexene were added to the solvent. n.b. 1.3 mmol Ni/grSi after thermal treatment gives Ni/OH =1 | | | | | | | |

**TABLE II.**

| Example | Mw (kD) | MWD |
|---|---|---|
| 1 | 150 | 40 |
| 2 | 180 | 8.5 |
| 3 | 83 | 8.2 |
| 4 | 92 | 11.7 |
| 5 | 90 | 9.7 |
| 6 | 61 | 23.8 |
| 10 | 48 | 16.7 |
| 11 | 42 | 15.4 |
| 12 | 94 | 5.8 |
| 13 | 90 | 6.8 |

Additional examples are displayed in Table III. The organoaluminium was TIBAI and it was added in excess. The polymerisation method was the same as that used for the other examples. The productivity was measured after a polymerisation time of 10 minutes.

**TABLE III.**

| ethylene pressure (bars) | Temp. (°C) | activity (g/gsi/h) | activity (g/g_{Ni}/h) | prod. (g/g_{Si}) | prod. (g/g_{Ni}) | equiv. catalyst | mass Si (mg) | amount cata (10⁻⁶ mol) |
|---|---|---|---|---|---|---|---|---|
| 21 | 55 | 402 | 81000 | 40 | 8100 | 0.05 | 48 | 4.1 |
| 21 | 74 | 1070 | 304000 | 144 | 41000 | 0.05 | 93 | 5.6 |
| 21 | 74 | 1424 | 404000 | 118 | 34000 | 0.05 | 99 | 5.9 |
| 21 | 55 | 470 | 79000 | 59 | 9900 | 0.05 | 41.9 | 4.2 |
| 4 | 55 | 340 | 71000 | 18 278^{a} | 3800 58000^{a} | 0.05 | 181 | 14.8 |
| 13 | 55 | 1030 | 220000 | 69 | 15000 | 0.05 | 127 | 10.2 |
| 21 | 55 | 390 | 117000 | 52 | 16000 | 0.05 | 107 | 6.1 |
| 21 | 55 | 809 | 270000 | 122 | 41000 | 0.05 | 141 | 7.2 |
| 21 | 55 | 302 | 78000 | 44 | 11000 | 0.05 | 129 | 8.5 |

| | | | | | | | | |
|---|---|---|---|---|---|---|---|---|
| ^{a} productivity after 60 minutes. | | | | | | | | |
| n.b. : the amount of catalyst is defined in terms of the number of moles of Ni | | | | | | | | |

The results are displayed in Table IV

**TABLE IV.**

| C2 pressure bars | Temp. °C | Productivity g/gsi | Productivity g/gNi | Max Activity g/gsi/h |
|---|---|---|---|---|
| 21 | 40 | 199 | 57 | 178 |
| 21 | 55 | 305 | 98 | 485 |
| 21 | 70 | 215 | 77 | 543 |
| 21 | 90 | 63 | 21 | 82 |
| 21 | 55 | 446 | 138 | 722 |
| 21 | 70 | 392 | 140 | 930 |
| 21 | 90 | 244 | 90 | 652 |
| 21 | 40 | 180 | 58 | 200 |
| 21 | 30 | 93 | 31 | 152 |

The polymers all had a broad molecular weight distribution: the polydispersity index was of from 10 to 35.

The apparent densities of the resulting polymer powders were measured: they ranged from 0.230 to 0.290 g/cm³.

From these results, it can be concluded that the alkylating agent used to treat the support has an influence on the polymer and it must therefore be selected in order to obtain the desired productivity and polymer properties.

## Claims

**1.** An active supported catalyst system that comprises:
a) a Keim-type metal complex of formula (II) 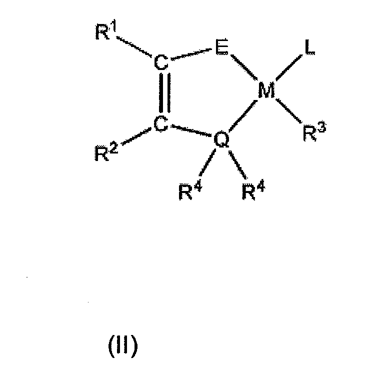 wherein
- E is an oxygen or sulfur atom;
- Q is a phosphorus, arsenic or antimony atom;
- R¹ and R² are independently selected from H, a hydrocarbyl having from1 to 20 carbon atoms, or a functional group selected from -OR', -CO₂R',-CO₂M, -C(O)NR"₂, -C(O)R', -SR', -SO₂R', OSO₂R', -P(O)(OR')_{2-y}(R")y, -Cl, -S(O)R', -CN, -NHR', -N(R')2, 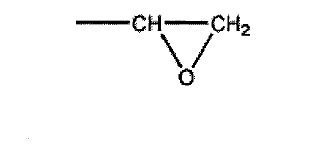 -Si(OR')_{3-x,}(R")_{x,} -OSi(OR')₃₋ₓ(R")_{x,} -NO₂, -SO₃Ma -PO₃Ma₂, P(O)(OR')₂Ma, wherein Ma is alkali or alkaline earth metal, ammonium, quaternary ammonium, phosphonium or arsonium, y is 0, 1 or 2, x is 0 or an inetger from 1 to 3, each R' is independently a hydrocarbyl having from 1 to 20 carbon atoms and each R" is independently hydrogen or a hydrocarbyl having from 1 to 20 carbon atoms, or R¹ and R², taken together, is a substituted or unsubstituted C5-8 alicyclic, C5-8 heterocyclic or a C6-14 aromatic ring, the heteroatom of the heterocyclic ring being selected from O, N, S;
- R³ and each R⁴ are each independently selected from hydrogen or a hydrocarbyl having from 1 to 20 carbon atoms;
- M is nickel, palladium or platinum;
- L is a ligand;
b) a functionalised support.

**3.** The supported catalyst system of claim 1 wherein metal M is Ni.

**4.** The supported catalyst system of claim 1 or claim 2 wherein any one of R¹ is a phenyl and R² is a group -C(O)OR^{$} wherein R^{$} is a hydrocarbon-based radical having from 1 to 6 carbon atoms.

**5.** The supported catalyst system of claim 3 wherein R^{$} is ethyl, tert-butyl or benzyl group.

**6.** The supported catalyst system of any one of the preceding claims wherein R³ and R⁴ are each a substituted or unsubstituted phenyl group.

**7.** The supported catalyst system of any one of the preceding claims wherein E is oxygen.

**8.** The supported catalyst system of any one of the preceding claims wherein Q is phosphorous.

**9.** The supported catalyst system of any one of claims 1 to 7 wherein L is a weakly coordinating ligand.

**10.** The supported catalyst system of claim 8 wherein L is pyridine

**11.** The supported catalyst system of any one of claims 1 to 7 wherein L is a strongly coordinating ligand and further comprises an electron acceptor.

**12.** The supported catalyst system of claim 10 wherein L is PPh₃.

**13.** The supported catalyst system of any one of the preceding claims wherein the neutral nickel complex has a reactive ester group.

**14.** A method for preparing the active supported catalyst system that comprises the steps of:
a) providing a support prepared from one or more porous mineral oxides;
b) optionally submitting the support to a thermal treatment;
c) optionally silanising the support with an reactive silane:
d) functionalising the support with a Lewis acid that is able to bind itself to the support;
e) dissolving a Keim-type metal complex in a solvent wherein the metal complex is given by formula (II) as described in any one of claims 1 to 12;
f) impregnating the functionalised support of step d) with the solution of step e);
g) optionally washing the impregnated support with an organic solvent;
h) drying the finished supported catalyst system.

**14.** The method of claim 13 wherein the support is silica and the support particles have at least one of the following characteristics:
- they include pores having a diameter ranging from 7.5 to 30 nm;
- they have a porosity ranging from 1 to 4 cm³ /g;
- they have a specific surface area ranging from 100 to 1000 m²/g; and
- they have an average diameter ranging from 1 to 100 *µ*m.

**15.** The method of any claim 13 or claim 14 wherein during the thermal treatment, the support is heated under inert gas at a temperature of from 120 to 800 °C.

**16.** The method of any one of claims 13 to 15 wherein the Lewis acid is a compound of formula AIRₙX₃₋ₙ.

**17.** The method of any one of claims 13 to 16 wherein the functionalising agent is trisobutylaluminium (TIBAL), diethylaluminium chloride (DEAC), diethylaluminium fluoride (DEAF) or triethylaluminium (TEAL).

**18.** A method for homo- or co-polymerising non polar and/or polar monomers that comprises the steps of:
a) providing the active supported catalyst system of any one of claims 1 to 12;
b) injecting one or more non polar and/or polar monomers;
c) maintaining under polymerisation conditions;
d) retrieving a polymer.

**19.** The method of claim 18 for homo- or co-polymerising ethylene with one or more polar monomers.

**20.** Polymers obtainable by the method of claim 18 or claim 19.
